# EUROPEAN PATENT APPLICATION

(11) **EP 1 001 298 A1**
(43) Date of publication of application: **17.05.2000**
(21) Application number: 98402818.3
(22) Date of filing: 13.11.1998
(51) Int. Cl.: G02B 27/22

(54) **Stereoscopic display device with two back light sources**

(71) Applicant: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(57) **Abstract**

The invention relates to a stereoscopic display device comprising a transmissive image reproducing element (10), two light sources (40, 46), optical means to direct the light emitted by one light source towards the right eye and to direct the light emitted by the other light source towards the left eye, and control means for displaying alternately an image for the right eye and an image for the left eye on the image reproducing element (10), and for activating the source emitting light for the right eye only when the image for the right eye is displayed and for activating the source emitting light for the left eye only when the displayed image is for the left eye.

According to the invention the optical means comprise mirror means (42) providing either a converging beam or a parallel beam.

The volume of this arrangement may be minimized.

## Description

The invention relates to a stereoscopic display device comprising a transmissive image reproducing element with two light sources on the rear side of this element.

For reproducing stereoscopic TV images, it is known to provide, on a display, alternately, an image for the left eye and an image for the right eye and to provide optical means directing the left image to the left eye and the right image to the right eye.

It has been more particularly proposed a LCD type display device wherein the picture elements (pixels) of the transmissive LCD are alternately activated in order to reproduce the image for the left eye and the image for the right eye. In this known device, two light sources and a lens are provided on the rear side of the (LCD) image reproducing element. These sources are located in the focal plane of the lens. The position of one source is such that the parallel beam that it produces on the front side of the LCD is directed towards the right eye and the other source is located in a position for which the parallel beam that it produces is directed towards the left eye. These sources are activated in synchronism with the corresponding images. In other words, the source which provides light directed towards the right eye is lit when the right image is activated on the LCD.

The invention is based on the recognition that the volume of the known device is hardly compatible with portable applications such as for lap top computers or individual movie displays.

In order to overcome this drawback, the invention provides mirror means to direct the light emitted by one light source towards to right eye and to direct the light emitted by the other source towards the left eye.

In the invention, the light sources and the image reproducing element are on the same side of the mirror. On the contrary, in the known device, the light sources and the image reproducing element are on opposite sides of a lens. Therefore, the volume of the device according to the invention may be smaller than the volume of the known device.

The mirror means may provide parallel beams or converging beams.

Other features and advantages of the invention will appear with the following description of some of its embodiments, this description being made in connection with the drawings in which:
figure 1 represents schematically a stereoscopic display according to an embodiment of the invention,
figure 2 represents a Fresnel mirror for the device of figure 1,
figure 3 is another representation of the device of figure 1, and
figure 4 shows another type of Fresnel mirror for the device of figure 1 or figure 3.

In the embodiments represented on the drawings, the stereoscopic display device comprises a liquid crystal display 10 comprising a multiplicity of pixels for which the transmissivity and the color is controlled in order to form the image. In order to display stereoscopic moving images, the period of period of one image (one frame) is divided into two fields wherein the first (or second) field produces the image for the right eye and the second (or first) field produces the image for the left eye.

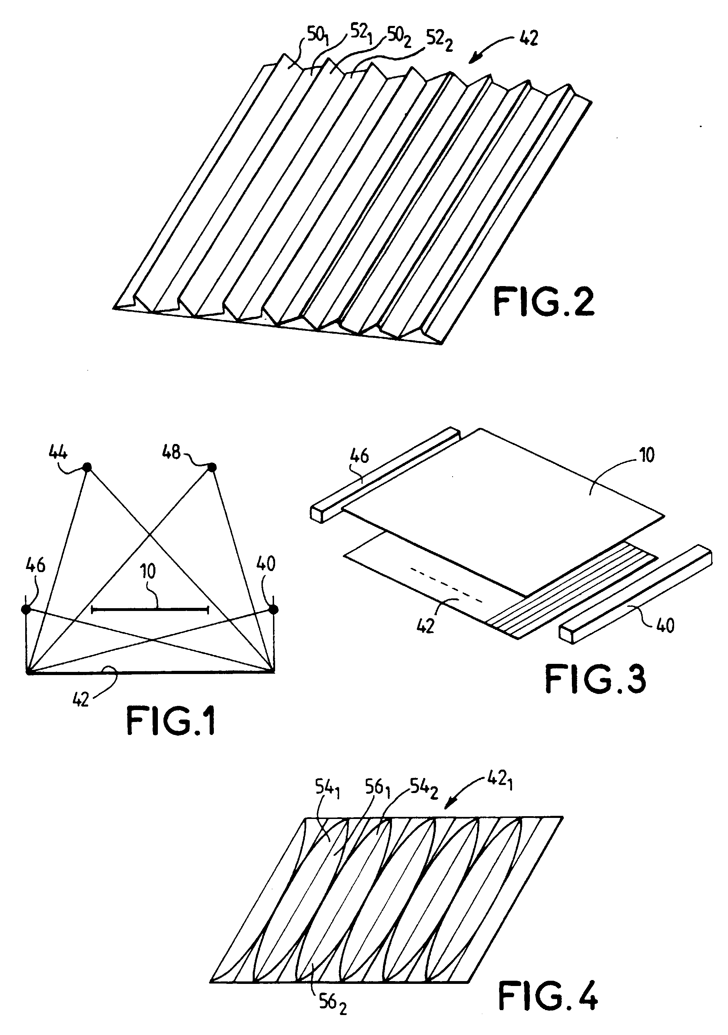

Two light sources 40 and 46 (figure 1 and figure 3) are lit alternately in synchronism with the reproduction of the images for the right eye and the images for the left eye. The light source 40 is energized when the image for the right eye is reproduced on LCD 10 and the light source 46 is energized when the LCD 10 reproduces the image for the left eye 48. In the embodiment shown, the mirror 42 (figure 1) or 42₁ (figure 4) is converging and of the Fresnel type. This mirror makes an image of the right source 40 on the right eye 44 and an image of the left source 46 on the left eye 48.

During the first field, only the light source 40 is active and LCD 10 displays only the image for the right eye.

During the second field, only light source 46 is active and LCD 10 displays only the left image.

As shown on figure 1, the light source 40 is active when the LCD 10 displays the right image and the converging mirror 42 makes the image of this source 40 on the right eye 44. Similarly, the light source 46 is active only when LCD 10 displays the left image and the mirror 42 makes the image of this source 46 on the left eye 48.

The position of LCD 10 with respect to sources 40, 46 and with respect to the mirror 42 must be such that the light from sources 40 and 46 must cross this LCD 10 only after having been reflected by mirror 42.

The advantage of this embodiment is that it may be compact, because the light sources 40 and 46 are on the same side of mirror 42 as LCD 10. On the contrary, in the known device, the light sources, on one hand, and the LCD 10, on the other hand, are on opposite sides of a lens.

In the embodiments represented on the figures, the light sources 40 and 46 (figure 3) are elongated along one side of element 10 of rectangular shape.

The Fresnel mirror 42 represented on figure 2 has alternate elongated stripes 50₁, 52₁, 50₂, 52₂, etc. The direction of elongation is the direction of elongated light sources 40 and 46. The elongated stripes 50₁, 50₂, 50₃ ... 50ᵢ ... form a first converging mirror and the second elongated stripes 52₁, 52₂ ... 52ᵢ ... form a second converging mirror. The first converging mirror is the one which makes the image of source 40 on the right eye 44 (figure 1) and the second mirror, with elongated elements 52_{i,} makes the image of light source 46 on the left eye 48.

In this example, the two Fresnel mirrors (stripes 50ᵢ and 52ᵢ) are of the cylindrical type.

In order to distribute the light energy of each source 40 and 46 on LCD 10, it is possible to use a diffuser and/or an optical integrator.

In the embodiment shown on figure 4, the Fresnel mirror 42₁ has also two types of alternated elongated stripes 54₁, 56₁, 54₂, 56₂, etc. which form converging mirrors for the right and the left eyes. But the shapes of these mirrors are such that they can be used in conjunction with light sources of the punctual type. For instance, the two mirrors define an ellipsoïdo-paraboloïd of revolution.

The light sources may be of any type, for instance light emitting diodes (LED). One or several diodes may be used to form a punctual light source and these light diodes may be also disposed along a line in order to form elongated light sources.

The transmissive image reproducing element 10 may be of any type, either black and white or colored.

In another embodiment, the light sources 40 and 46 are at focal point(s) or plane(s) of a mirror and provide parallel beams respectively to right eye 44 and to left eye 48.

## Claims

1. A stereoscopic display device comprising a transmissive image reproducing element (10), two light sources (40, 46), optical means to direct the light emitted by one light source towards the right eye and to direct the light emitted by the other light source towards the left eye, and control means for displaying alternately an image for the right eye and an image for the left eye on the image reproducing element (10), and for activating the source emitting light for the right eye only when the image for the right eye is displayed and for activating the source emitting light for the left eye only when the displayed image is for the left eye, characterized in that the optical means comprise mirror means (42, 42₁).

2. A stereoscopic display device according to claim 1, characterized in that the mirror means are of the Fresnel type.

3. A stereoscopic display device according to claim 2, characterized in that the Fresnel mirror means comprise first mirror elements for directing the light of the corresponding source to the right eye and second mirror elements for directing the light of the other source towards the left eye.

4. A stereoscopic display device according to claim 3, characterized in that the first and second mirror elements form an alternate succession.

5. A stereoscopic display device according to claim 3 or 4, characterized in that the mirror elements form stripes elongated in one direction.

6. A stereoscopic display device according to any of the previous claims, characterized in that the mirror means form cylindrical mirror means or ellipsoïdo-paraboloïd mirror means.

7. A stereoscopic display device according to any of the previous claims, characterized in that the light sources are elongated in the same direction.

8. A stereoscopic display device according to claim 7, characterized in that the image reproducing element has a rectangular shape and in that the light sources are elongated along one side of this image reproducing element.

9. A stereoscopic display device according to any of the previous claims, characterized in that the image reproducing element comprises a liquid crystal display element.

10. A stereoscopic display device according to any of the previous claims, characterized in that the image for the right eye is formed during a field of a frame and the image for the left eye is formed during the other field of the frame.

11. A stereoscopic display device according to any of the previous claims, characterized in that the mirror means are of the converging type.

12. A stereoscopic display device according to claim 1, characterized in that the mirror means provide parallel beams towards the eyes.
